(19) Europäisches Patentamt / European Patent Office / Office européen des brevets

(11) **EP 4 350 013 A1**

(12) **EUROPEAN PATENT APPLICATION**
published in accordance with Art. 153(4) EPC

(43) Date of publication:
**10.04.2024 Bulletin 2024/15**

(21) Application number: **22837610.9**

(22) Date of filing: **30.06.2022**

(51) International Patent Classification (IPC):
**C21D 8/12** (2006.01)          **C21D 9/46** (2006.01)
**C22C 38/00** (2006.01)          **C22C 38/06** (2006.01)
**C22C 38/60** (2006.01)          **H01F 1/147** (2006.01)

(52) Cooperative Patent Classification (CPC):
**C21D 8/12; C21D 9/46; C22C 38/00; C22C 38/06; C22C 38/60; H01F 1/147;** Y02T 10/64

(86) International application number:
**PCT/JP2022/026417**

(87) International publication number:
**WO 2023/282194 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.07.2021 JP 2021113867**

(71) Applicant: **JFE Steel Corporation**
**Tokyo 100-0011 (JP)**

(72) Inventors:
• **TANAKA, Takaaki**
  **Tokyo 100-0011 (JP)**
• **OKUBO, Tomoyuki**
  **Tokyo 100-0011 (JP)**
• **ZAIZEN, Yoshiaki**
  **Tokyo 100-0011 (JP)**
• **MIYAMOTO, Yukino**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **NON-ORIENTED ELECTROMAGNETIC STEEL SHEET AND METHOD FOR MANUFACTURING SAME**

(57)     Provided is a non-oriented electrical steel sheet having good fatigue resistance suitable for rotor cores and excellent magnetic properties suitable for stator cores. The non-oriented electrical steel sheet has a chemical composition of C: 0.01 % or less, Si: 2.0 % to 5.0 %, Mn: 0.05 % to 5.00 %, P: 0.1 % or less, S: 0.01 % or less, Al: 3.0 % or less and N: 0.005 % or less, with the balance being Fe and inevitable impurities, where Si + Al is 4.5 % or more. For the crystal grains in the steel sheet, the average grain size $X_1$ is 60 $\mu$m to 200 $\mu$m, the standard deviation $S_1$ of the crystal grain size distribution satisfies the specified formula (1), and the skewness $\gamma_1$ of the crystal grain size distribution is 1.50 or less.

**EP 4 350 013 A1**

**Description**

TECHNICAL FIELD

This disclosure relates to a non-oriented electrical steel sheet and a method for producing the same.

BACKGROUND

In recent years, there has been a growing worldwide demand for energy conservation in electrical equipment. Thus, more excellent magnetic properties are being demanded of non-oriented electrical steel sheets used in the iron cores of rotating machines. Recently, there has been a strong need for smaller and higher-output drive motors for hybrid electric vehicles (HEVs) and electric vehicles (EVs), and in order to achieve these needs, increasing the motor rotational speed is being considered.

The motor core is divided into a stator core and a rotor core. The rotor core of the HEV drive motor is subjected to large centrifugal forces due to its large outer diameter. The rotor core structurally has a very narrow section (width: 1 mm to 2 mm) called the rotor core bridge section, which is under particularly high stress during motor drive. Furthermore, the rotor core is subjected to high repetitive stress due to centrifugal force as the motor repeatedly rotates and stops, so the electrical steel sheet used in the rotor core must have excellent fatigue resistance. In particular, the temperature of the rotor core rises to about 100 °C to 150 °C when the motor is driven, so the electrical steel sheet used in the rotor core must have excellent fatigue resistance around 100 °C.

On the other hand, the electrical steel sheet used in the stator core should have high magnetic flux density and low iron loss in order to obtain a smaller and higher-output motor. In detail, for the ideal properties required of the electrical steel sheet used in the motor core, the electrical steel sheet for rotor cores should have excellent fatigue resistance and electrical steel sheet for stator cores should have high magnetic flux density and low iron loss.

Thus, even if the electrical steel sheet is used in the same motor core, the required properties for rotor cores and stator cores are very different. In producing motor cores, however, in order to increase material yield and productivity, rotor core materials and stator core materials should be obtained simultaneously from the same blank sheet by blanking, and then the respective core materials should be stacked into a rotor or stator core.

As a technique for producing a non-oriented electrical steel sheet with high strength and low iron loss for motor cores, for example, PTL 1 (JP2008-050686A) discloses a technique for producing a high-strength rotor core and stator core with low iron loss from the same material in which a high-strength non-oriented electrical steel sheet is produced, rotor and stator core materials are collected from the steel sheet by blanking to be stacked into a rotor and a stator core, and then only the stator core is subjected to stress relief annealing.

CITATION LIST

Patent Literature

PTL 1: JP2008-050686A

SUMMARY

However, according to our study, the technique disclosed in PTL 1 improves the yield stress by using the high-strength non-oriented electrical steel sheet but does not necessarily improve blanking fatigue strength under warm conditions, which is the most important property. Here, blanking fatigue strength is the fatigue strength when the end surface is not worked, for example, by polishing after blanking is performed. Furthermore, the technique disclosed in PTL 1 requires stress relief annealing at high temperatures to promote grain growth, and the cost of installing such equipment makes it difficult to spread the technique from an economic standpoint, except for some manufacturers who already have annealing equipment.

It could thus be helpful to provide a non-oriented electrical steel sheet having good fatigue resistance suitable for rotor cores and excellent magnetic properties suitable for stator cores, and to propose an inexpensive method for producing the non-oriented electrical steel sheet.

(Solution to Problem)

We have made intensive studies to find that by controlling the crystal grain size distribution, a non-oriented electrical steel sheet with high blanking fatigue strength, especially under warm conditions, and low iron loss can be obtained. We also found that the crystal grain size distribution can be controlled by optimizing conditions in the final pass of cold rolling.

This disclosure has been contrived on the basis of the aforementioned findings and is configured as follows.

[1] A non-oriented electrical steel sheet, comprising a chemical composition containing (consisting of) in mass%:

C: 0.01 % or less,
Si: 2.0 % or more and 5.0 % or less,
Mn: 0.05 % or more and 5.00 % or less,
P: 0.1 % or less,
S: 0.01 % or less,
Al: 3.0 % or less, and
N: 0.0050 % or less,
with the balance being Fe and inevitable impurities, where Si + Al is 4.5 % or more, wherein crystal grains in the steel sheet have an average grain size $X_1$ of 60 $\mu$m or more and 200 $\mu$m or less, a standard deviation $S_1$ of a crystal grain size distribution satisfies the following formula (1):

$$S_1/X_1 < 0.75 \qquad (1),$$

and a skewness $\gamma_1$ of the crystal grain size distribution is 1.50 or less.

[2] The non-oriented electrical steel sheet according to [1], wherein the chemical composition further contains, in mass%,
Co: 0.0005 % or more and 0.0050 % or less.
[3] The non-oriented electrical steel sheet according to [1] or [2], wherein the chemical composition further contains, in mass%,
Cr: 0.05 % or more and 5.00 % or less.
[4] The non-oriented electrical steel sheet according to any of [1] to [3], wherein the chemical composition further contains, in mass%, at least one selected from the group of

Ca: 0.001 % or more and 0.100 % or less,
Mg: 0.001 % or more and 0.100 % or less, and
REM: 0.001 % or more and 0.100 % or less.

[5] The non-oriented electrical steel sheet according to any of [1] to [4], wherein the chemical composition further contains, in mass%, at least one selected from the group consisting of

Sn: 0.001 % or more and 0.200 % or less and
Sb: 0.001 % or more and 0.200 % or less.

[6] The non-oriented electrical steel sheet according to any of [1] to [5], wherein the chemical composition further contains, in mass%, at least one selected from the group consisting of

Cu: 0 % or more and 0.5 % or less,
Ni: 0 % or more and 0.5 % or less,
Ti: 0 % or more and 0.005 % or less,
Nb: 0 % or more and 0.005 % or less,
V: 0 % or more and 0.010 % or less,
Ta: 0 % or more and 0.002 % or less,
B: 0 % or more and 0.002 % or less,
Ga: 0 % or more and 0.005 % or less,
Pb: 0 % or more and 0.002 % or less,
Zn: 0 % or more and 0.005 % or less,
Mo: 0 % or more and 0.05 % or less,
W: 0 % or more and 0.05 % or less,
Ge: 0 % or more and 0.05 % or less, and
As: 0 % or more and 0.05 % or less.

[7] A method for producing the non-oriented electrical steel sheet according to any of [1] to [6], comprising

hot rolling a steel material having the chemical composition according to any of [1] to [6] to obtain a hot-rolled sheet,

pickling the hot-rolled sheet to obtain a pickled hot-rolled sheet,

cold rolling the pickled hot-rolled sheet under the following conditions: a final pass entry temperature $T_1$ of 50 °C or higher, a final pass rolling reduction r of 15 % or more, and a final pass strain rate $\varepsilon_m$ of 100 s$^{-1}$ or more and 1000 s$^{-1}$ or less to obtain a cold-rolled sheet, and

heating the cold-rolled sheet to an annealing temperature $T_2$ of 875 °C or higher and 1050 °C or lower with an average heating rate $V_1$ of 10 °C/s or more within a temperature range of 500 °C to 700 °C, and then performing cooling to obtain a cold-rolled and annealed sheet that is the non-oriented electrical steel sheet.

(Advantageous Effect)

According to this disclosure, it is possible to provide a non-oriented electrical steel sheet that has both the characteristics suitable for rotor cores, namely high blanking fatigue strength under warm conditions, and characteristics suitable for stator cores, namely excellent magnetic properties. Therefore, the non-oriented electrical steel sheet of this disclosure can be used to provide high-performance motor cores at low cost with good material yield. The above effects are not affected in any way by the application of stress relief annealing to the steel sheet of this disclosure for the purpose of reducing the increase in iron loss due to distortion during blanking.

DETAILED DESCRIPTION

The details of this disclosure are described below, along with the reasons for its limitations.

<Chemical composition of non-oriented electrical steel sheet>

The following describes the preferable chemical composition that the non-oriented electrical steel sheet of this disclosure has. While the unit of the content of each element in the chemical composition is "mass%", the content is expressed simply in "%" unless otherwise specified.

C: 0.01 % or less

C is a harmful element that forms carbides while the motor is in use, causing magnetic aging and degrading iron loss properties. To avoid magnetic aging, the C content in the steel sheet is set to 0.01 % or less. The C content is preferably 0.004 % or less. No lower limit is placed on the C content, but since steel sheets with excessively reduced C are very expensive, the C content is preferably 0.0001 % or more.

Si: 2.0 % or more and 5.0 % or less

Si has the effect of increasing the specific resistance of steel to reduce iron loss and increasing the strength of steel through solid solution strengthening. To obtain such effect, the Si content is set to 2.0 % or more. On the other hand, Si content exceeding 5.0 % results in a decrease in saturation magnetic flux density and an associated significant decrease in magnetic flux density. Thus, the upper limit of the Si content is 5.0 %. Therefore, the Si content is set to 2.0 % or more and 5.0 % or less. The Si content is preferably 2.5 % or more. The Si content is preferably 5.0 % or less. The Si content is more preferably 3.0 % or more. The Si content is more preferably 5.0 % or less.

Mn: 0.05 % or more and 5.00 % or less

Mn, like Si, is a useful element in increasing the specific resistance and strength of steel. To obtain such effect, the Mn content needs to be 0.05 % or more. On the other hand, Mn content exceeding 5.00 % may promote MnC precipitation to degrade the magnetic properties, so the upper limit of Mn content is 5.00 %. Therefore, the Mn content is set to 0.05 % or more and 5.00 % or less. The Mn content is preferably 0.1 % or more. The Mn content is preferably 3.0 % or less.

P: 0.1 % or less

P is a useful element used to adjust the strength (hardness) of steel. However, P content exceeding 0.1 % decreases toughness and thus cracking is likely to occur during working, so the P content is set to 0.1 % or less. No lower limit is placed on the P content, but since steel sheets with excessively reduced P are very expensive, the P content is preferably 0.001 % or more. The P content is preferably 0.003 % or more. The P content is preferably 0.08 % or less.

S: 0.01 % or less

S is an element that adversely affects iron loss properties by forming fine precipitates. In particular, when the S content exceeds 0.01 %, the adverse effect becomes more pronounced, so the S content is set to 0.01 % or less. No lower limit is placed on the S content, but since steel sheets with excessively reduced S are very expensive, the S content is preferably 0.0001 % or more. The S content is preferably 0.0003 % or more. The S content is preferably 0.0080 % or less, and more preferably 0.005 % or less.

Al: 3.0 % or less

Al, like Si, is a useful element that increases the specific resistance of steel to reduce iron loss. To obtain such effects, the Al content is preferably 0.005 % or more. The Al content is more preferably 0.01 % or more, and further preferably 0.015 % or more. On the other hand, Al content exceeding 3.0 % may promote nitriding of the steel sheet surface, resulting in degradation of magnetic properties, so the upper limit of Al content is 3.0 %. The Al content is preferably 2.0 % or less.

N: 0.0050 % or less

N is an element that adversely affects iron loss properties by forming fine precipitates. In particular, when the N content exceeds 0.0050 %, the adverse effect becomes more pronounced, so the N content is set to 0.0050 % or less. The N content is preferably 0.003 % or less. No lower limit is placed on the N content, but since steel sheets with excessively reduced N are very expensive, the N content is preferably 0.0005 % or more. The N content is preferably 0.0008 % or more. The N content is preferably 0.0030 % or less.

Si + Al: 4.5 % or more

By setting Si + Al (total content of Si and Al) to 4.5 % or more and performing cold rolling under appropriate conditions, the skewness of the crystal grain size distribution of cold-rolled and annealed sheet can be reduced. This increases the blanking fatigue strength. Therefore, Si + Al is set to 4.5 % or more. The reason why the skewness of the crystal grain size distribution is reduced by setting Si + Al to 4.5 % or more and combining it with appropriate cold rolling is unknown. However, we assume that this effect is caused by a change in the balance of the slip system, which is active during cold rolling, and the uniform dispersion of nucleation sites of recrystallized grains in the cold-rolled sheet.

The balance other than the aforementioned components in the chemical composition of the electrical steel sheet according to one of the disclosed embodiments is Fe and inevitable impurities. However, the chemical composition of electrical steel sheet according to another embodiment may further contain at least one of the elements described below in predetermined amounts in addition to the above components (elements) depending on the required properties.

Co: 0.0005 % or more and 0.0050 % or less

Co has the effect of reinforcing the action of decreasing the skewness of the crystal grain size distribution of annealed sheet through appropriate control of Si + Al and cold rolling conditions. In detail, the addition of a small amount of Co can stably decrease the skewness of the crystal grain size distribution. To obtain such effect, the Co content should be set to 0.0005 % or more. On the other hand, Co content exceeding 0.0050 % saturates the effect and unnecessarily increases the cost. Therefore, when Co is added, the upper limit of Co content is 0.0050 %. Therefore, the chemical composition preferably further contains Co of 0.0005 % or more. The chemical composition preferably further contains Co of 0.0050 % or less.

Cr: 0.05 % or more and 5.0 % or less

Cr has the effect of increasing the specific resistance of steel to reduce iron loss. To achieve this effect, the Cr content should be 0.05 % or more. On the other hand, Cr content exceeding 5.00 % results in a decrease in saturation magnetic flux density and an associated significant decrease in magnetic flux density. Therefore, when Cr is added, the upper limit of the Cr content is 5.00 %. Accordingly, the chemical composition preferably further contains Cr of 0.05 % or more. The chemical composition preferably further contains Cr of 5.00 % or less.

Ca: 0.001 % or more and 0.100 % or less

Ca is an element that fixes S as sulfide and contributes to iron loss reduction. To obtain such effect, the Ca content should be 0.001 % or more. On the other hand, Ca content exceeding 0.100 % saturates the effect and unnecessarily increases the cost. Therefore, when Ca is added, the upper limit of Ca content is 0.100 %.

Mg: 0.001 % or more and 0.100 % or less

Mg is an element that fixes S as sulfide to contribute to iron loss reduction. To obtain such effect, the Mg content should be 0.001 % or more. On the other hand, Mg content exceeding 0.100 % saturates the effect and unnecessarily increases the cost. Therefore, when Mg is added, the upper limit of Mg content is 0.100 %.

REM: 0.001 % or more and 0.100 % or less

REM is a group of elements that fix S as sulfide to contribute to iron loss reduction. To obtain such effect, the REM content should be 0.001 % or more. On the other hand, REM content exceeding 0.100 % saturates the effect and unnecessarily increases the cost. Therefore, when REM is added, the upper limit of REM content is 0.100 %.
From the same perspective, the chemical composition preferably further contains at least one selected from the group of Ca: 0.001 % or more, Mg: 0.001 % or more, and REM: 0.001 % or more. The chemical composition preferably further contains at least one selected from the group of Ca: 0.100 % or less, Mg: 0.100 % or less, and REM: 0.100 % or less.

Sn: 0.001 % or more and 0.200 % or less

Sn is an effective element for improving magnetic flux density and reducing iron loss through texture improvement. To obtain such effect, the Sn content should be 0.001 % or more. On the other hand, Sn content exceeding 0.200 % saturates the effect and unnecessarily increases the cost. Therefore, when Sn is added, the upper limit of Sn content is 0.200 %.

Sb: 0.001 % or more and 0.200 % or less

Sb is an effective element for improving magnetic flux density and reducing iron loss through texture improvement. To obtain such effect, the Sb content should be 0.001 % or more. On the other hand, Sb content exceeding 0.200 % saturates the effect and unnecessarily increases the cost. Therefore, when Sb is added, the upper limit of Sb content is 0.200 %.
From the same perspective, the chemical composition preferably further contains at least one selected from the group of Sn: 0.001 % or more and Sb: 0.001 % or more. The chemical composition preferably further contains at least one selected from the group of Sn: 0.200 % or less and Sb: 0.200 % or less.

Cu: 0 % or more and 0.5 % or less

Cu is an element that improves the toughness of steel and can be added as needed. However, Cu content exceeding 0.5 % saturates the effect and thus, when Cu is added, the upper limit of Cu content is 0.5 %. When Cu is added, the Cu content is more preferably 0.01 % or more. The Cu content is more preferably 0.1 % or less. The Cu content may be 0 %.

Ni: 0 % or more and 0.5 % or less

Ni is an element that improves the toughness of steel and can be added as needed. However, Ni content exceeding 0.5 % saturates the effect and thus, when Ni is added, the upper limit of Ni content is 0.5 %. When Ni is added, the Ni content is more preferably 0.01 % or more. The Ni content is more preferably 0.1 % or less. The Ni content may be 0 %.

Ti: 0 % or more and 0.005 % or less

Ti forms fine carbonitrides and increases steel sheet strength through strengthening by precipitation to thereby improve blanking fatigue strength under warm conditions. Thus, Ti can be added as appropriate. On the other hand, Ti content exceeding 0.005 % deteriorates grain growth in the annealing process and increases iron loss. Therefore, when Ti is added, the upper limit of Ti content is 0.005 %. The Ti content is more preferably 0.002 % or less. The Ti content may be 0 %.

Nb: 0 % or more and 0.005 % or less

Nb forms fine carbonitrides and increases steel sheet strength through strengthening by precipitation to thereby improve blanking fatigue strength under warm conditions. Thus, Nb can be added as appropriate. On the other hand, Nb content exceeding 0.005 % deteriorates grain growth in the annealing process and increases iron loss. Therefore, when Nb is added, the upper limit of Nb content is 0.005 %. The Nb content is more preferably 0.002 % or less. The Nb content may be 0 %.

V: 0 % or more and 0.010 % or less

V forms fine carbonitrides and increases steel sheet strength through strengthening by precipitation to thereby improve blanking fatigue strength under warm conditions. Thus, V can be added as appropriate. On the other hand, V content exceeding 0.010 % deteriorates grain growth in the annealing process and increases iron loss. Therefore, when V is added, the upper limit of V content is 0.010 %. The V content is more preferably 0.005 % or less. The V content may be 0 %.

Ta: 0 % or more and 0.002 % or less

Ta forms fine carbonitrides and increases steel sheet strength through strengthening by precipitation to thereby improve blanking fatigue strength under warm conditions. Thus, Ta can be added as appropriate. On the other hand, Ta content exceeding 0.002 % deteriorates grain growth in the annealing process and increases iron loss. Therefore, when Ta is added, the upper limit of Ta content is 0.0020 %. The Ta content is more preferably 0.001 % or less. The Ta content may be 0 %.

B: 0 % or more and 0.002 % or less

B forms fine nitrides and increases steel sheet strength through strengthening by precipitation to thereby improve blanking fatigue strength under warm conditions. Thus, B can be added as appropriate. On the other hand, B content exceeding 0.002 % deteriorates grain growth in the annealing process and increases iron loss. Therefore, when B is added, the upper limit of B content is 0.002 %. The B content is more preferably 0.001 % or less. The B content may be 0 %.

Ga: 0 % or more and 0.005 % or less

Ga forms fine nitrides and increases steel sheet strength through strengthening by precipitation to thereby improve blanking fatigue strength under warm conditions. Ga can be added as appropriate. On the other hand, Ga content exceeding 0.005 % deteriorates grain growth in the annealing process and increases iron loss. Therefore, when Ga is added, the upper limit of Ga content is 0.005 %. The Ga content is more preferably 0.002 % or less. The Ga content may be 0 %.

Pb: 0 % or more and 0.002 % or less

Pb forms fine Pb particles and increases steel sheet strength through strengthening by precipitation to thereby improve blanking fatigue strength under warm conditions. Thus, Pb can be added as appropriate. On the other hand, Pb content exceeding 0.002 % deteriorates grain growth in the annealing process and increases iron loss. Therefore, when Pb is added, the upper limit of Pb content is 0.002 %. The Pb content is more preferably 0.001 % or less. The Pb content may be 0 %.

Zn: 0 % or more and 0.005 % or less

Zn is an element that increases iron loss by increasing fine inclusions, and especially when its content exceeds 0.005 %, the adverse effect becomes more pronounced. Therefore, even if Zn is added, the Zn content 0 % or more and 0.005 % or less. The Zn content is more preferably 0.003 % or less. The Zn content may be 0 %.

Mo: 0 % or more and 0.05 % or less

Mo forms fine carbides and increasing steel sheet strength through strengthening by precipitation to thereby improve blanking fatigue strength under warm conditions. Thus, Mo can be added as appropriate. On the other hand, Mo content exceeding 0.05 % deteriorates grain growth in the annealing process and increases iron loss. Therefore, when Mo is added, the upper limit of Mo content is 0.05 %. The Mo content is more preferably 0.02 % or less. The Mo content may be 0 %.

W: 0 % or more and 0.05 % or less

W forms fine carbides and increases steel sheet strength through strengthening by precipitation to thereby improve blanking fatigue strength under warm conditions. Thus, W can be added as appropriate. On the other hand, W content exceeding 0.05 % deteriorates grain growth in the annealing process and increases iron loss. Therefore, when W is added, the upper limit of W content is 0.05 %. The W content is more preferably 0.02 % or less. The W content may be 0 %.

Ge: 0 % or more and 0.05 % or less

Ge can be added as appropriate because it is an effective element in improving magnetic flux density and reducing iron loss by improving the texture. However, Ge content exceeding 0.05 % saturates the effect and thus, when Ge is added, the upper limit of Ge content is 0.05 % or less. The Ge content is more preferably 0.002 % or more. The Ge content is more preferably 0.01 % or less. The Ge content may be 0 %.

As: 0 % or more and 0.05 % or less

As can be added as appropriate because it is an effective element in improving magnetic flux density and reducing iron loss by improving the texture. On the other hand, As content exceeding 0.05 % saturates the effect and thus, when As is added, the upper limit of As content is 0.05 % or less. The As content is more preferably 0.002 % or more. The As content is more preferably 0.01 % or less. The As content may be 0 %.

The balance other than the aforementioned components in the chemical composition is Fe and inevitable impurities.

<Microstructure of non-oriented electrical steel sheet>

Next, the microstructure (crystal grain state) of the non-oriented electrical steel sheet will be explained.

(Average grain size $X_1$: 60 $\mu$m or more and 200 $\mu$m or less)

Our study revealed that fine crystal grains in the steel sheet improve the blanking fatigue strength. In detail, when the average grain size $X_1$ is 200 $\mu$m or less, the blanking fatigue strength under warm conditions can satisfy the value required in rotor materials of motors applied to HEVs or EVs (hereinafter referred to as HEV/EV motors). Thus, in the non-oriented electrical steel sheet of this disclosure, the average grain size $X_1$ is set to 200 $\mu$m or less. The required value for blanking fatigue strength under warm conditions for rotor materials is 300 MPa or more.

On the other hand, if the average grain size $X_1$ is excessively fine, iron loss increases. Therefore, the average grain size $X_1$ is set to 60 $\mu$m or more in the non-oriented electrical steel sheet of this disclosure. This allows the target iron loss properties ($W_{10/400} \leq 13.0$ (W/kg)) to be achieved.

(Standard deviation $S_1$ of crystal grain size distribution: satisfying formula (1))

When the value of the standard deviation of the crystal grain size distribution is large relative to the average grain size, the iron loss will increase because there will be many excessively fine or excessively coarse grains, which are unfavorable for reducing iron loss. Therefore, in the non-oriented electrical steel sheet of this disclosure, the standard deviation $S_1$ of the crystal grain size distribution should satisfy the formula (1) below in order for the iron loss to indicate the above target value required for the stator materials of HEV/EV motors:

$$S_1/X_1 < 0.75 \qquad\qquad (1).$$

In the non-oriented electrical steel sheet of this disclosure, it is preferable that the standard deviation $S_1$ of the crystal grain size distribution satisfies the following formula (1'):

$$S_1/X_1 < 0.70 \qquad\qquad (1').$$

(Skewness $\gamma_1$ of crystal grain size distribution: 1.50 or less)

We have found that by controlling the skewness of the crystal grain size distribution, it is possible to achieve a non-oriented electrical steel sheet with high blanking fatigue strength under warm conditions and low iron loss. This is achieved by controlling the skewness of the crystal grain size distribution simultaneously with the standard deviation $S_1$ of the crystal grain size distribution described above. In detail, the high skewness of the crystal grain size distribution means that the crystal grain size distribution has a long skirt on the coarse grain side, and that coarse grains relative to the average grain size exist with high probability. Such coarse crystal grains are not only prone to lead to cracks during blanking, but also to local strain concentration. Under warm conditions of about 100 °C, strain aging hardens the strain concentrated areas and enhances hardness non-uniformity in the microstructure, which deteriorates blanking fatigue resistance, especially under warm conditions of about 100 °C. Furthermore, coarse crystal grains induce an increase in eddy current losses and degrades the iron loss properties of the steel sheet as a whole. Specifically, when the skewness $\gamma_1$ of the crystal grain size distribution is 1.50 or less, the blanking fatigue limit under warm conditions will satisfy the above value required for the rotor materials of HEV/EV motors, and the iron loss will exhibit the above value required for the stator materials of HEV/EV motors. Therefore, in the non-oriented electrical steel sheet of this disclosure, the skewness $\gamma_1$ of the crystal grain size distribution is set to 1.50 or less. The skewness $\gamma_1$ of the crystal grain size distribution is preferably 1.20 or less and more preferably 1.00 or less. No lower limit is placed on the skewness $\gamma_1$, but $\gamma_1$ is usually 0 or more when the steel sheet is produced using the method of this disclosure.

The skewness $\gamma_1$ can be determined according to the procedure described in the EXAMPLES section below.

<Motor core>

The motor core can be formed by a rotor core, which is a stacked body of the above non-oriented electrical steel sheets, and a stator core, which is a stacked body of the above non-oriented electrical steel sheets. The motor core can be easily downsized and achieve high output because the rotor core has high blanking fatigue strength under warm conditions and the stator core has excellent magnetic properties.

<Method for producing non-oriented electrical steel sheet>

The following describes a method for producing a non-oriented electrical steel sheet according to this disclosure.

Generally stated, in the method, a steel material having the above chemical composition is used as a starting material, and hot rolling, optional hot-rolled sheet annealing, pickling, cold rolling, and annealing are performed in sequence. This method can be used to obtain the non-oriented electrical steel sheet of this disclosure. In this disclosure, as long as the chemical composition of the steel material, and the conditions of cold rolling process and annealing process are within predetermined ranges, other conditions are not limited. The method for producing a motor core is not particularly limited and can be based on commonly known methods.

(Steel material)

The steel material is not limited as long as it has the chemical composition previously described for the non-oriented electrical steel sheet.

The method for smelting the steel material is not particularly limited, and any publicly known smelting method using a converter or electric furnace, etc., can be employed. For productivity and other reasons, it is preferable to make a slab (steel material) by continuous casting after smelting, but the slab may also be made by publicly known casting methods such as the ingot casting and blooming or the thin slab continuous casting.

(Hot rolling process)

The hot rolling process is the process of applying hot rolling to the steel material having the above chemical composition to obtain a hot-rolled sheet. The hot rolling process is not particularly limited, and any commonly used hot rolling process in which the steel material having the above chemical composition is heated and subjected to hot rolling to obtain a hot-rolled sheet of a predetermined size can be used.

Examples of the commonly used hot rolling process include a hot rolling process in which a steel material is heated to a temperature of 1000 °C or higher and 1200 °C or lower, the heated steel material is subjected to hot rolling at a finisher delivery temperature of 800 °C or higher and 950 °C or lower, and after the hot rolling is completed, appropriate post-rolling cooling (for example, cooling at an average cooling rate of 20 °C/s or more and 100 °C/s or less within a temperature range of 450 °C to 950 °C) is applied, and coiling is performed at a coiling temperature of 400 °C or higher and 700 °C or lower to make a hot-rolled sheet of a predetermined size and shape.

(Hot-rolled sheet annealing process)

The hot-rolled sheet annealing process is the process of heating the hot-rolled sheet and holding it at a high temperature to thereby anneal the hot-rolled sheet. The hot-rolled sheet annealing process is not particularly limited, and the commonly used hot-rolled sheet annealing process can be applied. This hot-rolled sheet annealing process is not essential and may be omitted.

(Pickling process)

The pickling process is the process of applying pickling to the hot-rolled sheet after the above hot rolling process or optional hot-rolled sheet annealing process. The pickling process is not particularly limited and any pickling process in which the steel sheet is pickled to the extent that cold rolling can be performed after pickling, for example, a commonly used pickling process using hydrochloric acid or sulfuric acid, can be applied. When the hot-rolled sheet annealing process is performed, the pickling process may be carried out continuously in the same line as the hot-rolled sheet annealing process or in a separate line.

(Cold rolling process)

The cold rolling process is the process of applying cold rolling to the hot-rolled sheet that has undergone the above pickling (pickled sheet). In more detail, in the cold rolling process, the hot-rolled sheet that has been pickled as described above is cold rolled under the following conditions: final pass entry temperature $T_1$ of 50 °C or higher, final pass rolling reduction r of 15 % or more, and final pass strain rate $\varepsilon_m$ of 100 s$^{-1}$ or more and 1000 s$^{-1}$ or less to obtain a cold-rolled sheet. In the cold rolling process, as long as the above cold rolling conditions are met, cold rolling may be performed twice or more with intermediate annealing performed therebetween as necessary to produce a cold-rolled sheet of a predetermined size. In this case, the conditions for intermediate annealing are not particularly limited, and normal intermediate annealing can be applied.

[Final pass entry temperature $T_1$: 50 °C or higher.]

In the cold rolling process, the final pass entry temperature $T_1$ is set to 50 °C or higher. The reason for setting the final pass entry temperature $T_1$ to 50 °C or higher is to make the skewness $\gamma_1$ of the crystal grain size distribution in the resulting non-oriented electrical steel sheet 1.50 or less to form the desired steel sheet microstructure.
When the final pass entry temperature $T_1$ is lower than 50 °C, the strain distribution of the cold-rolled sheet is biased and the subsequent annealing process emphasizes the selectivity of grain growth, resulting in a higher skewness of the crystal grain size distribution of the annealed sheet. The reason for this is not clear, but we speculate that it is because by setting the final pass entry temperature $T_1$ to lower than 50 °C, the type of the active slip system is limited and non-uniform deformation is more likely to occur.
On the other hand, when the final pass entry temperature $T_1$ is 50 °C or higher, after the annealing process described below, the skewness $\gamma_1$ of the crystal grain size distribution is 1.50 or less. As a result, the desired steel sheet microstructure is obtained.
The final pass entry temperature $T_1$ is preferably 55 °C or higher, more preferably 60 °C or higher. No upper limit is placed on the final pass entry temperature $T_1$, but from the viewpoint of steel sheet sticking on the rollers, the final pass entry temperature $T_1$ is preferably 300 °C or lower.

[Final pass rolling reduction r: 15 % or more]

In the cold rolling, the final pass rolling reduction r is set to 15 % or more. The reason for setting the final pass rolling reduction r to 15 % or more is to obtain the effect of a series of cold rolling control to form the desired steel sheet microstructure.
If the final pass rolling reduction r is less than 15 %, the rolling reduction is too low, making it difficult to control the microstructure after annealing. On the other hand, when the final pass rolling reduction r is 15 % or more, the series of cold rolling control is effective. As a result, the desired steel sheet microstructure is obtained.
The final pass rolling reduction ratio r is preferably 20 % or more. No upper limit is placed on the final pass rolling reduction ratio r, but because an excessively high rolling reduction requires a large amount of equipment capacity and makes it difficult to control the shape of the cold-rolled sheet, the final pass rolling reduction r is usually 50 % or less.

[Final pass strain rate $\varepsilon_m$:100 s$^{-1}$ or more and 1000 s$^{-1}$ or less]

In the cold rolling, the final pass strain rate $\varepsilon_m$ is set to 100 s$^{-1}$ or more and 1000 s$^{-1}$ or less. The reason for setting the final pass strain rate $\varepsilon_m$ to 100 s$^{-1}$ or more and 1000 s$^{-1}$ or less is to suppress fracture during rolling while keeping the skewness $\gamma_1$ of the crystal grain size distribution in the resulting non-oriented electrical steel sheet 1.50 or less to form the desired steel sheet microstructure.

When the final pass strain rate $\varepsilon_m$ is less than 100 s$^{-1}$, the strain distribution of the cold-rolled sheet is biased and the subsequent annealing process emphasizes the selectivity of grain growth, resulting in a higher skewness $\gamma_1$ of the crystal grain size distribution of the annealed sheet. The reason for this is not clear, but we speculate that it is because the low strain rate lowers the flow stress, making it easier for strain to concentrate in crystal grains with a crystal orientation in which the crystal grains are easily deformed, resulting in non-uniform deformation. On the other hand, when the final pass strain rate $\varepsilon_m$ exceeds 1000 s$^{-1}$, the flow stress increases excessively, and brittle fracture is likely to occur during rolling.

When the final pass strain rate $\varepsilon_m$ is 100 s$^{-1}$ or more and 1000 s$^{-1}$ or less, the skewness $\gamma_1$ of the crystal grain size distribution is 1.50 or less after the annealing process described below, while suppressing fracture during rolling. As a result, the desired steel sheet microstructure is obtained.

The final pass strain rate $\varepsilon_m$ is preferably 150 s$^{-1}$ or more. The final pass strain rate $\varepsilon_m$ is preferably 800 s$^{-1}$ or less.

The strain rate $\varepsilon_m$ in each pass during cold rolling was derived using the following Ekelund's approximation formula.

[Math. 1]

$$\varepsilon_m \fallingdotseq \frac{v_R}{\sqrt{R'h_1}} \frac{2}{2-r} \cdot \sqrt{r}$$

where, $v_R$ is a roller peripheral speed (mm/s), R' is a roller radius (mm), $h_1$ is a roller entry side sheet thickness (mm), and r is a rolling reduction (%).

(Annealing process)

The annealing process is the process of applying annealing to the cold-rolled sheet that has undergone the cold rolling process. In more detail, in the annealing process, the cold-rolled sheet that has undergone the cold rolling process is heated to an annealing temperature $T_2$ of 875 °C or higher and 1050 °C or lower with an average heating rate $V_1$ of 10 °C/s or more within a temperature range of 500 °C to 700 °C, and then cooled to obtain a cold-rolled and annealed sheet (non-oriented electrical steel sheet). After the annealing process, an insulating coating can be applied to the surface. The coating method and type of coating are not particularly limited, and the commonly used insulation coating process can be applied.

[Average heating rate $V_1$ within a range of 500 °C to 700 °C: 10 °C/s or more]

In the annealing process, the average heating rate $V_1$ within a range of 500 °C to 700 °C is set to 10 °C/s or more. The reason for setting the average heating rate $V_1$ to 10 °C/s or more is to ensure that the standard deviation $S_1$ of the crystal grain size distribution in the resulting non-oriented electrical steel sheet satisfies the above formula (1) to form the desired steel sheet microstructure.

If the average heating rate $V_1$ is less than 10 °C/s, the frequency of recrystallized nuclei formation decreases due to excessive recovery, and the location dependence of the number of recrystallized nuclei increases. As a result, fine crystal grains and coarse crystal grains are mixed, and the standard deviation $S_1$ of the crystal grain size distribution becomes large and the above formula (1) is not satisfied.

On the other hand, when the average heating rate $V_1$ is 10 °C/s or more, the frequency of recrystallized nuclei formation increases and the location dependence of the number of recrystallized nuclei decreases. As a result, the standard deviation $S_1$ of the crystal grain size distribution becomes smaller and the above formula (1) is satisfied.

The average heating rate $V_1$ within a range of 500 °C to 700 °C is preferably 20 °C/s or more, and more preferably 50 °C/s or more. No upper limit is placed on the average heating rate $V_1$, but the average heating rate $V_1$ is

preferably 500 °C/s or less because an excessively high heating rate tends to cause temperature irregularities.

[Annealing temperature $T_2$: 875 °C or higher and 1050 °C or lower]

In the annealing process, the annealing temperature $T_2$ is set to 875 °C or higher and 1050 °C or lower. The reason for setting the annealing temperature $T_2$ to 875 °C or higher and 1050 °C or lower is as follows.

When the annealing temperature $T_2$ is lower than 875 °C, the recrystallized grains do not grow sufficiently and the average grain size $X_1$ in the resulting non-oriented electrical steel sheet cannot be 60 $\mu$m or more. On the other hand, when the annealing temperature $T_2$ is 875 °C or higher, sufficient grain growth occurs and the average grain size can be 60 $\mu$m or more, and thus the desired steel sheet microstructure can be obtained. The annealing temperature $T_2$ is preferably 900 °C or higher.

On the other hand, if the annealing temperature $T_2$ is above 1050 °C, recrystallized grains grow excessively and the average grain size $X_1$ cannot be 200 $\mu$m or less. Therefore, the annealing temperature $T_2$ is set to 1050 °C or lower. The annealing temperature $T_2$ is preferably 1025 °C or lower.

In the annealing process, the cold-rolled sheet is heated to the above annealing temperature $T_2$ and then cooled. This cooling is preferably performed at a cooling rate of 50 °C/s or less to prevent uneven cooling.

EXAMPLES

This disclosure will be described in detail below by way of examples. However, this disclosure is not limited to them.

<Production of cold-rolled and annealed sheet (non-oriented electrical steel sheet)>

Molten steels having the chemical compositions listed in Table 1 were obtained by steelmaking using a commonly known method and continuously cast into slabs (steel materials) having a thickness of 230 mm.

The resulting slabs were hot rolled to obtain hot-rolled sheets with a thickness of 2.0 mm. The obtained hot-rolled steel sheets were subjected to hot-rolled sheet annealing and pickled by a publicly known technique, and then cold-rolled to the sheet thickness listed in Table 2 to obtain cold-rolled steel sheets.

The resulting cold-rolled sheets were annealed under the conditions listed in Table 2, and then coated by a publicly known method to obtain cold-rolled and annealed sheets (non-oriented electrical steel sheets).

<Evaluation>

(Observation of microstructure)

A test piece for microstructural observation was collected from each of the obtained cold-rolled and annealed sheets. The collected test piece was then thinned and mirrored by chemical polishing on the rolled surface (ND surface) so that the observation plane was at the position corresponding to 1/4 of the sheet thickness. Electron backscatter diffraction (EBSD) measurements were performed on the mirrored observation plane to obtain local orientation data. The step size was 10 $\mu$m and the measurement area was at least 100 $mm^2$ or more. The size of the measurement area was adjusted appropriately so that the number of crystal grains was 5000 or more in the subsequent analysis. The entire area may be measured in a single scan, or the results of multiple scans may be combined using the Combo Scan function. Analysis software: OIM Analysis 8 was used to analyze the obtained local orientation data.

Prior to data analysis, grain-averaged data points were sorted using the analysis software, Partition Properties under the condition of Formula: GCI[&;5.000,2,0.000,0,0,0,8.0,1,1,1.0,0;]>0.1 to exclude unsuitable data points for the analysis. At this time, the valid data points were 98 % or more.

For the above adjusted data, the crystal grain boundary was defined as follows: Grain Tolerance Angle: 5°, Minimum Grain Size: 2, Minimum Anti-Grain Size: 2, Multiple Rows Requirement and Anti-Grain Multiple Rows Requirement: both OFF, and the analysis was performed as described below.

Crystal grain information was output for the preprocessed data using the Export Grain File function. Grain Size (Diameter in microns) of Grain File Type 2 was used as crystal grain size ($X_i$). The average grain size $X_1$, standard deviation $S_1$, and skewness $\gamma_1$ were calculated for all obtained crystal grain information. The following formulas were used in the calculations.

[Math. 2]

$$X_1 = \frac{1}{n}\sum_{i=1}^{n} X_i$$

$$S_1 = \sqrt{\frac{1}{n-1}\sum_{i=1}^{n}(X_i - X_1)^2}$$

$$\gamma_1 = \frac{n}{(n-1)(n-2)}\sum_{i=1}^{n}\frac{(X_i - X_1)^3}{S_1^{\,3}}$$

where, n is the number of crystal grains and $X_i$ is each crystal grain size data (i: 1, 2, ..., n).

(Evaluation of blanking fatigue strength under warm conditions)

From each of the obtained cold-rolled and annealed sheets, tensile fatigue test piece (having the same shape as No. 1 test piece in accordance with JIS Z2275: 1978, b: 15 mm, R: 100 mm) was collected by blanking so that the rolling direction was the longitudinal direction and subjected to the fatigue test under warm conditions. The fatigue test was conducted under the following conditions: test temperature: 100 °C, pulsating tension loading, stress ratio (=minimum stress/maximum stress): 0.1, and frequency: 20 Hz. The maximum stress that did not cause fatigue fracture at $10^7$ repetitions was measured as warm blanking fatigue limit. When the warm blanking fatigue limit was 300 MPa or more, it was evaluated as having excellent blanking fatigue strength under warm conditions.

(Evaluation of magnetic properties)

From each of the resulting cold-rolled and annealed sheets, test pieces of 30 mm wide and 280 mm long were collected for magnetic properties measurement so that the rolling direction and direction orthogonal to the rolling direction were the longitudinal direction, and the iron loss $W_{10/400}$ of the cold-rolled and annealed sheet was measured by Epstein's method in accordance with JIS C2550-1: 2011. The iron loss properties were evaluated as good when $W_{10/400} \leq 13.0$ (W/kg).
The results are listed in Table 3.

[Table 1]

Table 1

| Steel sample ID | Chemical Composition [mass%] | | | | | | | | | | | | | | | | | | | | | | | | | | | | | Remarks |
| --- | --- | --- | --- | --- | --- | --- | --- | --- | --- | --- | --- | --- | --- | --- | --- | --- | --- | --- | --- | --- | --- | --- | --- | --- | --- | --- | --- | --- | --- | --- |
| | C | Si | Mn | P | S | Al | N | Si+Al | Co | Cr | Ca | Mg | REM | Sn | Sb | Cu | Ni | Ti | Nb | V | Ta | B | Ga | Pb | Zn | Mo | W | Ge | As | |
| A | 0.0039 | 4.3 | 1.64 | 0.017 | 0.0029 | 0.9 | 0.0027 | 5.2 | - | - | - | - | - | - | - | - | - | - | - | - | - | - | - | - | - | - | - | - | - | Conforming Example |
| B | 0.0017 | 3.9 | 0.89 | 0.003 | 0.0016 | 1.2 | 0.0019 | 5.1 | - | - | - | - | - | - | - | - | - | - | - | - | - | - | - | - | - | - | - | - | - | Conforming Example |
| C | 0.0015 | 4.2 | 2.16 | 0.008 | 0.0027 | 1.3 | 0.0018 | 5.5 | - | - | - | - | - | - | - | - | - | - | - | - | - | - | - | - | - | - | - | - | - | Conforming Example |
| D | 0.0031 | 3.2 | 0.22 | 0.019 | 0.0022 | 1.5 | 0.0025 | 4.7 | - | - | - | - | - | - | - | - | - | - | - | - | - | - | - | - | - | - | - | - | - | Conforming Example |
| E | 0.0017 | 3.5 | 0.96 | 0.011 | 0.0031 | 1.3 | 0.0028 | 4.8 | - | - | - | - | - | - | - | - | - | - | - | - | - | - | - | - | - | - | - | - | - | Conforming Example |
| F | 0.0032 | 4.2 | 0.12 | 0.007 | 0.0022 | 0.6 | 0.0030 | 4.8 | - | - | - | - | - | - | - | - | - | - | - | - | - | - | - | - | - | - | - | - | - | Conforming Example |
| G | 0.0024 | 4.4 | 0.21 | 0.015 | 0.0011 | 1.0 | 0.0016 | 5.4 | - | - | - | - | - | - | - | - | - | - | - | - | - | - | - | - | - | - | - | - | - | Conforming Example |
| H | 0.0030 | 4.6 | 0.25 | 0.009 | 0.0012 | 0.7 | 0.0026 | 5.3 | - | - | - | - | - | - | - | - | - | - | - | - | - | - | - | - | - | - | - | - | - | Conforming Example |
| I | 0.0020 | 4.2 | 0.90 | 0.008 | 0.0033 | 0.3 | 0.0025 | 4.5 | - | - | - | - | - | - | - | - | - | - | - | - | - | - | - | - | - | - | - | - | - | Conforming Example |
| J | 0.0039 | 3.3 | 0.12 | 0.019 | 0.0035 | 1.9 | 0.0030 | 5.2 | - | - | - | - | - | - | - | - | - | - | - | - | - | - | - | - | - | - | - | - | - | Conforming Example |
| K | 0.0058 | 3.8 | 0.88 | 0.008 | 0.0025 | 1.2 | 0.0027 | 5.0 | - | - | - | - | - | - | - | - | - | - | - | - | - | - | - | - | - | - | - | - | - | Conforming Example |
| L | 0.0037 | _1.9_ | 0.12 | 0.021 | 0.0036 | 2.6 | 0.0032 | 4.5 | - | - | - | - | - | - | - | - | - | - | - | - | - | - | - | - | - | - | - | - | - | Comparative Example |
| M | 0.0039 | 2.6 | 0.12 | 0.020 | 0.0039 | 1.9 | 0.0033 | 4.5 | - | - | - | - | - | - | - | - | - | - | - | - | - | - | - | - | - | - | - | - | - | Conforming Example |
| N | 0.0038 | 5.0 | 0.12 | 0.019 | 0.0031 | 0.4 | 0.0029 | 5.7 | - | - | - | - | - | - | - | - | - | - | - | - | - | - | - | - | - | - | - | - | - | Conforming Example |
| O | 0.0019 | 4.2 | _0.03_ | 0.007 | 0.0028 | 0.3 | 0.0023 | 4.5 | - | - | - | - | - | - | - | - | - | - | - | - | - | - | - | - | - | - | - | - | - | Comparative Example |

Note: Underlined if outside the scope of the disclosure.

Table 1 (cont'd)

| Steel sample ID | Chemical Composition [mass%] | | | | | | | | | | | | | | | | | | | | | | | | | | | | | Remarks |
|---|---|---|---|---|---|---|---|---|---|---|---|---|---|---|---|---|---|---|---|---|---|---|---|---|---|---|---|---|---|---|
| | C | Si | Mn | P | S | Al | N | Si+Al | Co | Cr | Ca | Mg | REM | Sn | Sb | Cu | Ni | Ti | Nb | V | Ta | B | Ga | Pb | Zn | Mo | W | Ge | As | |
| P | 0.0024 | 4.2 | 0.08 | 0.007 | 0.0030 | 0.3 | 0.0030 | 4.5 | – | – | – | – | – | – | – | – | – | – | – | – | – | – | – | – | – | – | – | – | – | Conforming Example |
| Q | 0.0021 | 4.2 | 3.20 | 0.007 | 0.0025 | 0.3 | 0.0026 | 4.5 | – | – | – | – | – | – | – | – | – | – | – | – | – | – | – | – | – | – | – | – | – | Conforming Example |
| R | 0.0024 | 4.2 | 5.10 | 0.009 | 0.0037 | 0.3 | 0.0024 | 4.5 | – | – | – | – | – | – | – | – | – | – | – | – | – | – | – | – | – | – | – | – | – | Comparative Example |
| T | 0.0031 | 4.6 | 0.26 | 0.008 | 0.0015 | 0.002 | 0.0021 | 4.6 | – | – | – | – | – | – | – | – | – | – | – | – | – | – | – | – | – | – | – | – | – | Conforming Example |
| U | 0.0032 | 4.6 | 0.25 | 0.011 | 0.0013 | 0.012 | 0.0023 | 4.6 | – | – | – | – | – | – | – | – | – | – | – | – | – | – | – | – | – | – | – | – | – | Conforming Example |
| V | 0.0033 | 4.5 | 0.24 | 0.010 | 0.0014 | 2.2 | 0.0027 | 6.7 | – | – | – | – | – | – | – | – | – | – | – | – | – | – | – | – | – | – | – | – | – | Conforming Example |
| W | 0.0026 | 4.7 | 0.26 | 0.007 | 0.0013 | 3.2 | 0.0029 | 7.9 | – | – | – | – | – | – | – | – | – | – | – | – | – | – | – | – | – | – | – | – | – | Comparative Example |
| X | 0.0027 | 3.1 | 0.23 | 0.015 | 0.0023 | 1.2 | 0.0028 | 4.3 | – | – | – | – | – | – | – | – | – | – | – | – | – | – | – | – | – | – | – | – | – | Comparative Example |
| Y | 0.0013 | 3.6 | 1.00 | 0.010 | 0.0025 | 1.3 | 0.0030 | 4.9 | 0.0015 | – | – | – | – | – | – | – | – | – | – | – | – | – | – | – | – | – | – | – | – | Conforming Example |
| Z | 0.0013 | 3.4 | 0.91 | 0.008 | 0.0023 | 1.3 | 0.0021 | 4.7 | 0.0042 | – | – | – | – | – | – | – | – | – | – | – | – | – | – | – | – | – | – | – | – | Conforming Example |
| AA | 0.0017 | 3.4 | 1.01 | 0.012 | 0.0033 | 1.3 | 0.0031 | 4.7 | – | 0.2 | – | – | – | – | – | – | – | – | – | – | – | – | – | – | – | – | – | – | – | Conforming Example |
| AB | 0.0020 | 3.6 | 1.00 | 0.014 | 0.0037 | 1.3 | 0.0033 | 4.9 | – | – | 0.005 | – | – | – | – | – | – | – | – | – | – | – | – | – | – | – | – | – | – | Conforming Example |
| AC | 0.0014 | 3.6 | 0.97 | 0.010 | 0.0027 | 1.3 | 0.0027 | 4.9 | – | – | – | 0.004 | – | – | – | – | – | – | – | – | – | – | – | – | – | – | – | – | – | Conforming Example |
| AD | 0.0018 | 3.5 | 0.94 | 0.014 | 0.0038 | 1.3 | 0.0033 | 4.8 | – | – | – | – | 0.015 | – | – | – | – | – | – | – | – | – | – | – | – | – | – | – | – | Conforming Example |
| AE | 0.0020 | 3.6 | 0.96 | 0.013 | 0.0029 | 1.3 | 0.0031 | 4.9 | – | – | – | – | – | 0.04 | – | – | – | – | – | – | – | – | – | – | – | – | – | – | – | Conforming Example |
| AF | 0.0018 | 3.5 | 0.97 | 0.012 | 0.0028 | 1.3 | 0.0030 | 4.8 | – | – | – | – | – | – | 0.06 | – | – | – | – | – | – | – | – | – | – | – | – | – | – | Conforming Example |

Note: Underlined if outside the scope of the disclosure.

Table 1 (cont'd)

| Steel sample ID | Chemical Composition [mass%] | | | | | | | | | | | | | | | | | | | | | | | | | | | | | | | Remarks |
|---|---|---|---|---|---|---|---|---|---|---|---|---|---|---|---|---|---|---|---|---|---|---|---|---|---|---|---|---|---|---|---|---|
| | C | Si | Mn | P | S | Al | N | Si+Al | Co | Cr | Ca | Mg | REM | Sn | Sb | Cu | Ni | Ti | Nb | V | Ta | B | Ga | Pb | Zn | Mo | W | Ge | As | |
| AG | 0.0016 | 3.6 | 0.99 | 0.013 | 0.0032 | 1.3 | 0.0024 | 4.9 | 0.0006 | – | – | – | – | – | – | – | – | – | – | – | – | – | – | – | – | – | – | – | – | Conforming Example |
| AH | 0.0015 | 3.6 | 0.94 | 0.010 | 0.0029 | 1.3 | 0.0031 | 4.9 | – | 4.7 | – | – | – | – | – | – | – | – | – | – | – | – | – | – | – | – | – | – | – | Conforming Example |
| AI | 0.0018 | 3.5 | 0.96 | 0.010 | 0.0035 | 1.3 | 0.0026 | 4.8 | – | – | 0.002 | – | – | – | – | – | – | – | – | – | – | – | – | – | – | – | – | – | – | Conforming Example |
| AJ | 0.0013 | 3.5 | 0.95 | 0.009 | 0.0024 | 1.3 | 0.0035 | 4.8 | – | – | – | 0.094 | – | – | – | – | – | – | – | – | – | – | – | – | – | – | – | – | – | Conforming Example |
| AK | 0.0016 | 3.5 | 0.96 | 0.011 | 0.0034 | 1.3 | 0.0024 | 4.8 | – | – | – | – | 0.092 | – | – | – | – | – | – | – | – | – | – | – | – | – | – | – | – | Conforming Example |
| AL | 0.0018 | 3.5 | 1.00 | 0.011 | 0.0036 | 1.3 | 0.0028 | 4.8 | – | – | – | – | – | 0.18 | – | – | – | – | – | – | – | – | – | – | – | – | – | – | – | Conforming Example |
| AM | 0.0020 | 3.5 | 0.98 | 0.013 | 0.0035 | 1.3 | 0.0031 | 4.8 | – | – | – | – | – | – | 0.19 | – | – | – | – | – | – | – | – | – | – | – | – | – | – | Conforming Example |
| AN | 0.0034 | 3.2 | 0.22 | 0.016 | 0.0021 | 1.5 | 0.0024 | 4.7 | – | – | – | – | – | – | – | 0.04 | – | – | – | – | – | – | – | – | – | – | – | – | – | Conforming Example |
| AO | 0.0024 | 3.1 | 0.22 | 0.021 | 0.0022 | 1.5 | 0.0021 | 4.6 | – | – | – | – | – | – | – | 0.48 | – | – | – | – | – | – | – | – | – | – | – | – | – | Conforming Example |
| AP | 0.0038 | 3.2 | 0.22 | 0.023 | 0.0017 | 1.5 | 0.0020 | 4.7 | – | – | – | – | – | – | – | – | 0.03 | – | – | – | – | – | – | – | – | – | – | – | – | Conforming Example |
| AQ | 0.0023 | 3.2 | 0.23 | 0.021 | 0.0018 | 1.5 | 0.0027 | 4.7 | – | – | – | – | – | – | – | – | 0.47 | – | – | – | – | – | – | – | – | – | – | – | – | Conforming Example |
| AR | 0.0035 | 3.2 | 0.23 | 0.020 | 0.0021 | 1.5 | 0.0027 | 4.7 | – | – | – | – | – | – | – | – | – | 0.0011 | – | – | – | – | – | – | – | – | – | – | – | Conforming Example |
| AS | 0.0025 | 3.2 | 0.22 | 0.017 | 0.0022 | 1.5 | 0.0029 | 4.7 | – | – | – | – | – | – | – | – | – | 0.0042 | – | – | – | – | – | – | – | – | – | – | – | Conforming Example |
| AT | 0.0036 | 3.2 | 0.23 | 0.019 | 0.0021 | 1.5 | 0.0029 | 4.7 | – | – | – | – | – | – | – | – | – | – | 0.0008 | – | – | – | – | – | – | – | – | – | – | Conforming Example |
| AU | 0.0026 | 3.1 | 0.21 | 0.017 | 0.0025 | 1.5 | 0.0019 | 4.6 | – | – | – | – | – | – | – | – | – | – | 0.0048 | – | – | – | – | – | – | – | – | – | – | Conforming Example |
| AV | 0.0037 | 3.2 | 0.23 | 0.023 | 0.0021 | 1.5 | 0.0021 | 4.7 | – | – | – | – | – | – | – | – | – | – | – | 0.0012 | – | – | – | – | – | – | – | – | – | Conforming Example |
| AW | 0.0028 | 3.2 | 0.22 | 0.017 | 0.0018 | 1.5 | 0.0031 | 4.7 | – | – | – | – | – | – | – | – | – | – | – | 0.0093 | – | – | – | – | – | – | – | – | – | Conforming Example |

Note: Underlined if outside the scope of the disclosure.

Table 1 (cont'd)

| Steel sample ID | Chemical Composition [mass%] | | | | | | | | | | | | | | | | | | | | | | | | | | | | | Remarks |
|---|---|---|---|---|---|---|---|---|---|---|---|---|---|---|---|---|---|---|---|---|---|---|---|---|---|---|---|---|---|---|
| | C | Si | Mn | P | S | Al | N | Si+Al | Co | Cr | Ca | Mg | REM | Sn | Sb | Cu | Ni | Ti | Nb | V | Ta | B | Ga | Pb | Zn | Mo | W | Ge | As | |
| AX | 0.0035 | 3.2 | 0.22 | 0.018 | 0.0025 | 1.5 | 0.0019 | 4.7 | – | – | – | – | – | – | – | – | – | – | – | – | 0.0005 | – | – | – | – | – | – | – | – | Conforming Example |
| AY | 0.0037 | 3.2 | 0.22 | 0.023 | 0.0018 | 1.5 | 0.0030 | 4.7 | – | – | – | – | – | – | – | – | – | – | – | – | 0.0019 | – | – | – | – | – | – | – | – | Conforming Example |
| AZ | 0.0026 | 3.3 | 0.22 | 0.017 | 0.0017 | 1.5 | 0.0019 | 4.8 | – | – | – | – | – | – | – | – | – | – | – | – | – | 0.0003 | – | – | – | – | – | – | – | Conforming Example |
| BA | 0.0030 | 3.2 | 0.22 | 0.016 | 0.0023 | 1.5 | 0.0031 | 4.7 | – | – | – | – | – | – | – | – | – | – | – | – | – | 0.0019 | – | – | – | – | – | – | – | Conforming Example |
| BB | 0.0028 | 3.1 | 0.23 | 0.016 | 0.0018 | 1.5 | 0.0024 | 4.6 | – | – | – | – | – | – | – | – | – | – | – | – | – | – | 0.0001 | – | – | – | – | – | – | Conforming Example |
| BC | 0.0024 | 3.2 | 0.23 | 0.020 | 0.0027 | 1.5 | 0.0022 | 4.7 | – | – | – | – | – | – | – | – | – | – | – | – | – | – | 0.0045 | – | – | – | – | – | – | Conforming Example |
| BD | 0.0035 | 3.2 | 0.23 | 0.021 | 0.0025 | 1.5 | 0.0030 | 4.7 | – | – | – | – | – | – | – | – | – | – | – | – | – | – | – | 0.0001 | – | – | – | – | – | Conforming Example |
| BE | 0.0036 | 3.1 | 0.21 | 0.016 | 0.0023 | 1.5 | 0.0027 | 4.6 | – | – | – | – | – | – | – | – | – | – | – | – | – | – | – | 0.0018 | – | – | – | – | – | Conforming Example |
| BF | 0.0030 | 3.3 | 0.22 | 0.018 | 0.0024 | 1.5 | 0.0028 | 4.8 | – | – | – | – | – | – | – | – | – | – | – | – | – | – | – | – | 0.0007 | – | – | – | – | Conforming Example |
| BG | 0.0030 | 3.2 | 0.23 | 0.016 | 0.0024 | 1.5 | 0.0021 | 4.7 | – | – | – | – | – | – | – | – | – | – | – | – | – | – | – | – | 0.0045 | – | – | – | – | Conforming Example |
| BH | 0.0035 | 3.2 | 0.22 | 0.023 | 0.0021 | 1.5 | 0.0029 | 4.7 | – | – | – | – | – | – | – | – | – | – | – | – | – | – | – | – | – | 0.010 | – | – | – | Conforming Example |
| BI | 0.0025 | 3.2 | 0.22 | 0.016 | 0.0018 | 1.5 | 0.0025 | 4.7 | – | – | – | – | – | – | – | – | – | – | – | – | – | – | – | – | – | 0.048 | – | – | – | Conforming Example |
| BJ | 0.0032 | 3.2 | 0.22 | 0.015 | 0.0022 | 1.5 | 0.0030 | 4.7 | – | – | – | – | – | – | – | – | – | – | – | – | – | – | – | – | – | – | 0.005 | – | – | Conforming Example |
| BK | 0.0038 | 3.1 | 0.23 | 0.023 | 0.0024 | 1.5 | 0.0019 | 4.6 | – | – | – | – | – | – | – | – | – | – | – | – | – | – | – | – | – | – | 0.046 | – | – | Conforming Example |
| BL | 0.0034 | 3.2 | 0.22 | 0.017 | 0.0020 | 1.5 | 0.0027 | 4.7 | – | – | – | – | – | – | – | – | – | – | – | – | – | – | – | – | – | – | – | 0.003 | – | Conforming Example |
| BM | 0.0033 | 3.2 | 0.22 | 0.019 | 0.0019 | 1.5 | 0.0029 | 4.7 | – | – | – | – | – | – | – | – | – | – | – | – | – | – | – | – | – | – | – | 0.047 | – | Conforming Example |
| BN | 0.0030 | 3.2 | 0.23 | 0.023 | 0.0027 | 1.5 | 0.0030 | 4.7 | – | – | – | – | – | – | – | – | – | – | – | – | – | – | – | – | – | – | – | – | 0.005 | Conforming Example |
| BO | 0.0024 | 3.1 | 0.23 | 0.022 | 0.0023 | 1.5 | 0.0020 | 4.6 | – | – | – | – | – | – | – | – | – | – | – | – | – | – | – | – | – | – | – | – | 0.042 | Conforming Example |

Note: Underlined if outside the scope of the disclosure.

[Table 2]

Table 2

| No. | Steel sample ID | Sheet thickness [mm] | Cold rolling process | | | | Annealing process | | Remarks |
| | | | Final pass entry temperature $T_1$ [°C] | Final pass rolling reduction r [%] | Final pass strain rate [s$^{-1}$] | Fracture during rolling | Heating rate $V_1$ [°C/s] | Annealing temperature $T_2$ [°C] | |
|---|---|---|---|---|---|---|---|---|---|
| 1 | A | 0.25 | 67 | 29 | 630 | - | 52 | 1000 | Example |
| 2 | B | 0.25 | 65 | 22 | 650 | - | 65 | 900 | Example |
| 3 | C | 0.25 | 68 | 32 | 290 | - | 82 | 1000 | Example |
| 4 | D | 0.25 | 62 | 29 | 400 | - | 60 | 950 | Example |
| 5 | E | 0.25 | 67 | 21 | 520 | - | 96 | 990 | Example |
| 6 | F | 0.25 | 68 | 24 | 440 | - | 119 | 980 | Example |
| 7 | G | 0.25 | 63 | 25 | 520 | - | 64 | 980 | Example |
| 8 | H | 0.25 | 67 | 30 | 900 | - | 72 | 1010 | Example |
| 9 | I | 0.25 | 69 | 23 | 280 | - | 80 | 930 | Example |
| 10 | J | 0.25 | 70 | 29 | 950 | - | 89 | 910 | Example |
| 11 | K | 0.25 | 66 | 22 | 650 | - | 65 | 900 | Example |
| 12 | L | 0.25 | 69 | 29 | 950 | - | 92 | 910 | Comparative Example |
| 13 | M | 0.25 | 71 | 29 | 950 | - | 90 | 910 | Example |
| 14 | N | 0.25 | 69 | 29 | 950 | - | 93 | 910 | Example |
| 15 | O | 0.25 | 68 | 23 | 280 | - | 80 | 930 | Comparative Example |
| 16 | P | 0.25 | 69 | 23 | 280 | - | 77 | 930 | Example |
| 17 | Q | 0.25 | 70 | 23 | 280 | - | 79 | 930 | Example |
| 18 | R | 0.25 | 70 | 23 | 280 | - | 82 | 930 | Comparative Example |
| 19 | T | 0.25 | 66 | 30 | 900 | - | 72 | 1010 | Example |

19

EP 4 350 013 A1

(continued)

| No. | Steel sample ID | Sheet thickness [mm] | Cold rolling process | | | | Annealing process | | Remarks |
|-----|-----------------|----------------------|----------------------|---|---|---|-------------------|---|---------|
| | | | Final pass entry temperature $T_1$ [°C] | Final pass rolling reduction r [%] | Final pass strain rate [s$^{-1}$] | Fracture during rolling | Heating rate $V_1$ [°C/s] | Annealing temperature $T_2$ [°C] | |
| 20 | U | 0.25 | 67 | 30 | 900 | - | 74 | 1010 | Example |
| 21 | V | 0.25 | 67 | 30 | 900 | - | 69 | 1010 | Example |
| 22 | W | 0.25 | 67 | 30 | 900 | - | 70 | 1010 | Comparative Example |
| 23 | X | 0.25 | 62 | 29 | 400 | - | 90 | 950 | Comparative Example |

Note: Underlined if outside the scope of the disclosure.

| No. | Steel sample ID | Sheet thickness [mm] | Cold rolling process | | | | Annealing process | | Remarks |
|---|---|---|---|---|---|---|---|---|---|
| | | | Final pass entry temperature $T_1$ [°C] | Final pass rolling reduction $r$ [%] | Final pass strain rate [s$^{-1}$] | Fracture during rolling | Heating rate $V_1$ [°C/s] | Annealing temperature $T_2$ [°C] | |
| 24 | Y | 0.25 | 67 | 21 | 520 | - | 94 | 990 | Example |
| 25 | z | 0.25 | 67 | 21 | 520 | - | 94 | 990 | Example |
| 26 | AA | 0.25 | 68 | 21 | 520 | - | 98 | 990 | Example |
| 27 | AB | 0.25 | 67 | 21 | 520 | - | 99 | 990 | Example |
| 28 | AC | 0.25 | 67 | 21 | 520 | - | 99 | 990 | Example |
| 29 | AD | 0.25 | 66 | 21 | 520 | - | 91 | 990 | Example |
| 30 | AE | 0.25 | 67 | 21 | 520 | - | 100 | 990 | Example |
| 31 | AF | 0.25 | 67 | 21 | 520 | - | 92 | 990 | Example |
| 32 | A | 0.25 | 41 | 29 | 630 | - | 50 | 1000 | Comparative Example |
| 33 | A | 0.25 | 52 | 29 | 630 | - | 50 | 1000 | Example |
| 34 | A | 0.25 | 57 | 29 | 630 | - | 52 | 1000 | Example |
| 35 | A | 0.25 | 66 | 9 | 630 | - | 54 | 1000 | Comparative Example |
| 36 | A | 0.25 | 67 | 18 | 630 | - | 52 | 1000 | Example |
| 37 | C | 0.25 | 68 | 29 | 80 | - | 79 | 1000 | Comparative Example |
| 38 | C | 0.25 | 68 | 32 | 130 | - | 81 | 1000 | Example |
| 39 | C | 0.25 | 69 | 32 | 940 | partially fractured | 83 | 1000 | Example |
| 40 | C | 0.25 | 69 | 32 | 1260 | whole fractured | - | - | Comparative Example |
| 41 | C | 0.25 | 66 | 32 | 290 | - | 7 | 1000 | Comparative Example |
| 42 | C | 0.25 | 69 | 32 | 290 | - | 18 | 1000 | Example |

(continued)

| No. | Steel sample ID | Sheet thickness [mm] | Cold rolling process | | | | Annealing process | | Remarks |
|---|---|---|---|---|---|---|---|---|---|
| | | | Final pass entry temperature $T_1$ [°C] | Final pass rolling reduction r [%] | Final pass strain rate [s$^{-1}$] | Fracture during rolling | Heating rate $V_1$ [°C/s] | Annealing temperature $T_2$ [°C] | |
| 43 | C | 0.25 | 69 | 32 | 290 | - | 41 | 1000 | Example |
| 44 | F | 0.25 | 69 | 24 | 440 | - | 119 | 860 | Comparative Example |
| 45 | F | 0.25 | 67 | 24 | 440 | - | 117 | 880 | Example |
| 46 | F | 0.25 | 68 | 24 | 440 | - | 120 | 1030 | Example |
| 47 | F | 0.25 | 69 | 24 | 440 | - | 123 | 1070 | Comparative Example |
| Note: Underlined if outside the scope of the disclosure. | | | | | | | | | |

EP 4 350 013 A1

| No. | Steel sample ID | Sheet thickness [mm] | Cold rolling process | | | | Annealing process | | Remarks |
|---|---|---|---|---|---|---|---|---|---|
| | | | Final pass entry temperature $T_1$ [°C] | Final pass rolling reduction r [%] | Final pass strain rate [s$^{-1}$] | Fracture during rolling | Heating rate $V_1$ [°C/s] | Annealing temperature $T_2$ [°C] | |
| 48 | AG | 0.25 | 66 | 21 | 520 | - | 98 | 990 | Example |
| 49 | AH | 0.25 | 68 | 21 | 520 | - | 96 | 990 | Example |
| 50 | AI | 0.25 | 67 | 21 | 520 | - | 96 | 990 | Example |
| 51 | AJ | 0.25 | 65 | 21 | 520 | - | 98 | 990 | Example |
| 52 | AK | 0.25 | 66 | 21 | 520 | - | 98 | 990 | Example |
| 53 | AL | 0.25 | 67 | 21 | 520 | - | 92 | 990 | Example |
| 54 | AM | 0.25 | 66 | 21 | 520 | - | 99 | 990 | Example |
| 55 | AN | 0.25 | 62 | 29 | 400 | - | 59 | 950 | Example |
| 56 | AO | 0.25 | 62 | 29 | 400 | - | 57 | 950 | Example |
| 57 | AP | 0.25 | 61 | 29 | 400 | - | 62 | 950 | Example |
| 58 | AQ | 0.25 | 63 | 29 | 400 | - | 61 | 950 | Example |
| 59 | AR | 0.25 | 62 | 29 | 400 | - | 62 | 950 | Example |
| 60 | AS | 0.25 | 61 | 29 | 400 | - | 60 | 950 | Example |
| 61 | AT | 0.25 | 63 | 29 | 400 | - | 62 | 950 | Example |
| 62 | AU | 0.25 | 62 | 29 | 400 | - | 58 | 950 | Example |
| 63 | AV | 0.25 | 62 | 29 | 400 | - | 58 | 950 | Example |
| 64 | AW | 0.25 | 62 | 29 | 400 | - | 60 | 950 | Example |

Note: Underlined if outside the scope of the disclosure.

| No. | Steel sample ID | Sheet thickness [mm] | Cold rolling process | | | | Annealing process | | Remarks |
|---|---|---|---|---|---|---|---|---|---|
| | | | Final pass entry temperature $T_1$ [°C] | Final pass rolling reduction r [%] | Final pass strain rate [s$^{-1}$] | Fracture during rolling | Heating rate $V_1$ [°C/s] | Annealing temperature $T_2$ [°C] | |
| 65 | AX | 0.25 | 63 | 29 | 400 | - | 58 | 950 | Example |
| 66 | AY | 0.25 | 62 | 29 | 400 | - | 58 | 950 | Example |
| 67 | AZ | 0.25 | 62 | 29 | 400 | - | 60 | 950 | Example |
| 68 | BA | 0.25 | 63 | 29 | 400 | - | 60 | 950 | Example |
| 69 | BB | 0.25 | 64 | 29 | 400 | - | 59 | 950 | Example |
| 70 | BC | 0.25 | 63 | 29 | 400 | - | 59 | 950 | Example |
| 71 | BD | 0.25 | 62 | 29 | 400 | - | 58 | 950 | Example |
| 72 | BE | 0.25 | 63 | 29 | 400 | - | 62 | 950 | Example |
| 73 | BF | 0.25 | 62 | 29 | 400 | - | 58 | 950 | Example |
| 74 | BG | 0.25 | 63 | 29 | 400 | - | 59 | 950 | Example |
| 75 | BH | 0.25 | 61 | 29 | 400 | - | 61 | 950 | Example |
| 76 | BI | 0.25 | 62 | 29 | 400 | - | 62 | 950 | Example |
| 77 | BJ | 0.25 | 62 | 29 | 400 | - | 59 | 950 | Example |
| 78 | BK | 0.25 | 61 | 29 | 400 | - | 62 | 950 | Example |
| 79 | BL | 0.25 | 62 | 29 | 400 | - | 58 | 950 | Example |
| 80 | BM | 0.25 | 63 | 29 | 400 | - | 63 | 950 | Example |
| 81 | BN | 0.25 | 61 | 29 | 400 | - | 58 | 950 | Example |
| 82 | BO | 0.25 | 60 | 29 | 400 | - | 63 | 950 | Example |

Note. Underlined if outside the scope of the disclosure.

[Table 3]

Table 3

| No. | Cold-rolled and annealed sheet (non-oriented electrical steel sheet) | | | | Warm blanking fatigue limit $\sigma_{max}$ (MPa) | Iron loss $W_{10/400}$ (W/kg) | Remarks |
|---|---|---|---|---|---|---|---|
| | Average grain size $X_1$ [μm] | Standard deviation $S_1$ | $S_1/X_1$ | Skewness of crystal grain size distribution $\gamma_1$ | | | |
| 1 | 110 | 62 | 0.56 | 0.72 | 390 | 100 | Example |
| 2 | 69 | 46 | 0.66 | 0.70 | 460 | 9.1 | Example |
| 3 | 137 | 79 | 0.58 | 0.60 | 360 | 8.8 | Example |
| 4 | 102 | 63 | 0.62 | 0.87 | 370 | 11.1 | Example |
| 5 | 129 | 84 | 0.65 | 0.79 | 350 | 10.4 | Example |
| 6 | 125 | 83 | 0.66 | 0.61 | 360 | 11.6 | Example |
| 7 | 121 | 71 | 0.59 | 0.59 | 370 | 11.3 | Example |
| 8 | 87 | 53 | 0.61 | 0.81 | 430 | 9.6 | Example |
| 9 | 70 | 45 | 0.64 | 0.80 | 460 | 10.8 | Example |
| 10 | 71 | 43 | 0.61 | 0.86 | 440 | 9.7 | Example |
| 11 | 87 | 63 | 0.72 | 0.47 | 420 | 109 | Example |
| 12 | 76 | 46 | 0.60 | 0.89 | 380 | <u>13.4</u> | Comparative Example |
| 13 | 76 | 43 | 0.57 | 0.91 | 400 | 12.2 | Example |
| 14 | 97 | 56 | 0.58 | 0.94 | 430 | 100 | Example |
| 15 | 99 | 68 | 0.69 | 0.73 | 390 | <u>13.7</u> | Comparative Example |
| 16 | 84 | 50 | 0.60 | 0.83 | 420 | 12.3 | Example |
| 17 | 113 | 70 | 0.62 | 0.73 | 390 | 11.5 | Example |
| 18 | 104 | 67 | 0.64 | 0.76 | 400 | <u>14.1</u> | Comparative Example |
| 19 | 105 | 62 | 0.59 | 0.84 | 380 | 12.2 | Example |
| 20 | 143 | 86 | 0.60 | 0.82 | 340 | 12.2 | Example |
| 21 | 112 | 74 | 0.66 | 0.84 | 390 | 11.4 | Example |
| 22 | 134 | 74 | 0.55 | 0.78 | 380 | <u>13.8</u> | Comparative Example |
| 23 | 112 | 65 | 0.58 | <u>1.52</u> | <u>280</u> | <u>13.2</u> | Comparative Example |
| 24 | 131 | 93 | 0.71 | 0.82 | 410 | 90 | Example |
| 25 | 123 | 77 | 0.63 | 0.75 | 420 | 8.6 | Example |
| 26 | 105 | 74 | 0.70 | 0.76 | 380 | 8.8 | Example |
| 27 | 93 | 66 | 0.71 | 0.86 | 400 | 8.6 | Example |
| 28 | 135 | 81 | 0.60 | 0.78 | 350 | 8.4 | Example |
| 29 | 112 | 75 | 0.67 | 0.74 | 370 | 9.1 | Example |

(continued)

| No. | Cold-rolled and annealed sheet (non-oriented electrical steel sheet) | | | | Warm blanking fatigue limit $\sigma_{max}$ (MPa) | Iron loss $W_{10/400}$ (W/kg) | Remarks |
|---|---|---|---|---|---|---|---|
| | Average grain size $X_1$ [μm] | Standard deviation $S_1$ | $S_1/X_1$ | Skewness of crystal grain size distribution $\gamma_1$ | | | |
| 30 | 127 | 77 | 0.61 | 0.83 | 350 | 9.3 | Example |
| 31 | 103 | 65 | 0.63 | 0.85 | 380 | 8.5 | Example |
| 32 | 135 | 80 | 0.59 | 2.13 | 260 | 13.9 | Comparative Example |
| 33 | 97 | 56 | 0.58 | 1.42 | 310 | 11.9 | Example |
| 34 | 88 | 49 | 0.56 | 1.16 | 320 | 11.8 | Example |
| 35 | 95 | 81 | 0.85 | 1.69 | 290 | 13.7 | Comparative Example |
| 36 | 96 | 70 | 0.73 | 1.07 | 320 | 12.2 | Example |
| 37 | 109 | 58 | 0.53 | 1.73 | 270 | 13.4 | Comparative Example |
| 38 | 107 | 57 | 0.53 | 1.18 | 320 | 11.4 | Example |
| 39 | 119 | 67 | 0.56 | 0.61 | 370 | 8.9 | Example |
| 40 | - | - | - | - | - | - | Comparative Example |
| 41 | 126 | 108 | 0.86 | 0.60 | 370 | 14.2 | Comparative Example |
| 42 | 87 | 64 | 0.73 | 0.58 | 420 | 11.3 | Example |
| 43 | 134 | 95 | 0.71 | 0.60 | 360 | 12.0 | Example |
| 44 | 58 | 39 | 0.67 | 0.61 | 510 | 14.7 | Comparative Example |
| 45 | 69 | 44 | 0.64 | 0.63 | 470 | 12.0 | Example |
| 46 | 186 | 126 | 0.68 | 0.60 | 310 | 11.0 | Example |
| 47 | 234 | 151 | 0.65 | 0.64 | 260 | 10.1 | Comparative Example |

Note: Underlined if outside the scope of the disclosure.

| No. | Cold-rolled and annealed sheet (non-oriented electrical steel sheet) | | | | Warm blanking fatigue limit $\sigma_{max}$ (MPa) | Iron loss $W_{10/400}$ (W/kg) | Remarks |
|---|---|---|---|---|---|---|---|
| | Average grain size $X_1$ [μm] | Standard deviation $S_1$ | $S_1/X_1$ | Skewness of crystal grain size distribution $\gamma_1$ | | | |
| 48 | 128 | 76.8 | 0.60 | 0.78 | 400 | 8.1 | Example |
| 49 | 132 | 83.2 | 0.63 | 0.80 | 350 | 9.4 | Example |
| 50 | 131 | 79.9 | 0.61 | 0.82 | 360 | 9.1 | Example |
| 51 | 122 | 83.0 | 0.68 | 0.74 | 340 | 8.3 | Example |
| 52 | 131 | 83.8 | 0.64 | 0.75 | 340 | 9.1 | Example |

(continued)

| No. | Cold-rolled and annealed sheet (non-oriented electrical steel sheet) | | | | Warm blanking fatigue limit $\sigma_{max}$ (MPa) | Iron loss $W_{10/400}$ (W/kg) | Remarks |
|---|---|---|---|---|---|---|---|
| | Average grain size $X_1$ [μm] | Standard deviation $S_1$ | $S_1/X_1$ | Skewness of crystal grain size distribution $\gamma_1$ | | | |
| 53 | 135 | 85.1 | 0.63 | 0.83 | 360 | 9.9 | Example |
| 54 | 124 | 76.9 | 0.62 | 0.75 | 340 | 8.8 | Example |
| 55 | 106 | 66.8 | 0.63 | 0.90 | 380 | 11.2 | Example |
| 56 | 98 | 63.7 | 0.65 | 0.89 | 380 | 10.8 | Example |
| 57 | 101 | 63.6 | 0.63 | 0.83 | 360 | 11.8 | Example |
| 58 | 97 | 60.1 | 0.62 | 0.86 | 370 | 11.6 | Example |
| 59 | 90 | 59.4 | 0.66 | 0.83 | 410 | 12.3 | Example |
| 60 | 92 | 54.3 | 0.59 | 0.83 | 410 | 12 | Example |
| 61 | 88 | 53.7 | 0.61 | 0.83 | 410 | 12.1 | Example |
| 62 | 87 | 56.6 | 0.65 | 0.84 | 410 | 12.3 | Example |
| 63 | 92 | 55.2 | 0.60 | 0.86 | 420 | 12.1 | Example |
| 64 | 88 | 59.0 | 0.67 | 0.89 | 420 | 12.2 | Example |
| 65 | 83 | 47.3 | 0.57 | 0.86 | 420 | 12.1 | Example |
| 66 | 86 | 55.0 | 0.64 | 0.82 | 410 | 12.1 | Example |
| 67 | 85 | 49.3 | 0.58 | 0.91 | 430 | 12 | Example |
| 68 | 83 | 49.8 | 0.60 | 0.89 | 420 | 12.5 | Example |
| 69 | 87 | 56.6 | 0.65 | 0.82 | 410 | 12.1 | Example |
| 70 | 90 | 59.4 | 0.66 | 0.85 | 410 | 12.1 | Example |
| 71 | 89 | 54.3 | 0.61 | 0.85 | 410 | 124 | Example |
| 72 | 85 | 49.3 | 0.58 | 0.88 | 420 | 12.2 | Example |
| 73 | 98 | 57.8 | 0.59 | 0.88 | 370 | 12.3 | Example |
| 74 | 98 | 63.7 | 0.65 | 0.87 | 370 | 12.2 | Example |
| 75 | 90 | 52.2 | 0.58 | 0.87 | 420 | 12.1 | Example |
| 76 | 84 | 52.9 | 0.63 | 0.85 | 410 | 12.3 | Remark |
| 77 | 90 | 52.2 | 0.58 | 0.84 | 410 | 12.5 | Example |
| 78 | 90 | 58.5 | 0.65 | 0.84 | 410 | 12 | Example |
| 79 | 97 | 56.3 | 0.58 | 0.87 | 370 | 9.4 | Example |
| 80 | 104 | 64.5 | 0.62 | 0.85 | 360 | 9.1 | Example |
| 81 | 96 | 62.4 | 0.65 | 0.89 | 370 | 90 | Example |
| 82 | 100 | 66.0 | 0.66 | 0.86 | 370 | 9.7 | Example |
| Note: Underlined if outside the scope of the disclosure. | | | | | | | |

The results of 3 indicate that all of the non-oriented electrical steel sheets according to this disclosure have both excellent warm blanking fatigue strength and excellent iron loss properties. The motor core obtained by combining a rotor core formed by stacking the cold-rolled and annealed sheets according to this disclosure and a stator core formed by stacking the heat-treated sheets according to this disclosure had excellent warm fatigue resistance.

Furthermore, when stress relief annealing was applied to the steel sheets for the purpose of restoring iron loss reduction due to strain during blanking, the effect of this disclosure was not affected in any way, and both excellent blanking fatigue strength under warm conditions and excellent iron loss properties were achieved.

**Claims**

1.  A non-oriented electrical steel sheet, comprising a chemical composition containing in mass%:

    C: 0.01 % or less,
    Si: 2.0 % or more and 5.0 % or less,
    Mn: 0.05 % or more and 5.00 % or less,
    P: 0.1 % or less,
    S: 0.01 % or less,
    Al: 3.0 % or less, and
    N: 0.0050 % or less,
    with the balance being Fe and inevitable impurities, where Si + Al is 4.5 % or more, wherein
    crystal grains in the steel sheet have an average grain size $X_1$ of 60 $\mu$m or more and 200 $\mu$m or less,
    a standard deviation $S_1$ of a crystal grain size distribution satisfies the following formula (1):

    $$S_1/X_1 < 0.75 \qquad\qquad (1),$$

    and a skewness $\gamma_1$ of the crystal grain size distribution is 1.50 or less.

2.  The non-oriented electrical steel sheet according to claim 1, wherein the chemical composition further contains, in mass%,
    Co: 0.0005 % or more and 0.0050 % or less.

3.  The non-oriented electrical steel sheet according to claim 1 or 2, wherein the chemical composition further contains, in mass%,
    Cr: 0.05 % or more and 5.00 % or less.

4.  The non-oriented electrical steel sheet according to any one of claims 1 to 3, wherein the chemical composition further contains, in mass%, at least one selected from the group of

    Ca: 0.001 % or more and 0.100 % or less,
    Mg: 0.001 % or more and 0.100 % or less, and
    REM: 0.001 % or more and 0.100 % or less.

5.  The non-oriented electrical steel sheet according to any one of claims 1 to 4, wherein the chemical composition further contains, in mass%, at least one selected from the group consisting of

    Sn: 0.001 % or more and 0.200 % or less and
    Sb: 0.001 % or more and 0.200 % or less.

6.  The non-oriented electrical steel sheet according to any one of claims 1 to 5, wherein the chemical composition further contains, in mass%, at least one selected from the group consisting of

    Cu: 0 % or more and 0.5 % or less,
    Ni: 0 % or more and 0.5 % or less,
    Ti: 0 % or more and 0.005 % or less,
    Nb: 0 % or more and 0.005 % or less,
    V: 0 % or more and 0.010 % or less,
    Ta: 0 % or more and 0.002 % or less,
    B: 0 % or more and 0.002 % or less,
    Ga: 0 % or more and 0.005 % or less,
    Pb: 0 % or more and 0.002 % or less,

Zn: 0 % or more and 0.005 % or less,
Mo: 0 % or more and 0.05 % or less,
W: 0 % or more and 0.05 % or less,
Ge: 0 % or more and 0.05 % or less, and
As: 0 % or more and 0.05 % or less.

7.  A method for producing the non-oriented electrical steel sheet according to any one of claims 1 to 6, comprising

hot rolling a steel material having the chemical composition according to any one of claims 1 to 6 to obtain a hot-rolled sheet,
pickling the hot-rolled sheet to obtain a pickled hot-rolled sheet,
cold rolling the pickled hot-rolled sheet under the following conditions: a final pass entry temperature $T_1$ of 50 °C or higher, a final pass rolling reduction r of 15 % or more, and a final pass strain rate $\varepsilon_m$ of 100 $s^{-1}$ or more and 1000 $s^{-1}$ or less to obtain a cold-rolled sheet, and
heating the cold-rolled sheet to an annealing temperature $T_2$ of 875 °C or higher and 1050 °C or lower with an average heating rate $V_1$ of 10 °C/s or more within a temperature range of 500 °C to 700 °C, and then performing cooling to obtain a cold-rolled and annealed sheet that is the non-oriented electrical steel sheet.

## INTERNATIONAL SEARCH REPORT

| International application No. |
|---|
| **PCT/JP2022/026417** |

### A. CLASSIFICATION OF SUBJECT MATTER

*C21D 8/12*(2006.01)i; *C21D 9/46*(2006.01)i; *C22C 38/00*(2006.01)i; *C22C 38/06*(2006.01)i; *C22C 38/60*(2006.01)i; *H01F 1/147*(2006.01)i
FI:  C22C38/00 303U; C22C38/06; C22C38/60; C21D9/46 501A; H01F1/147 175; C21D8/12 A

According to International Patent Classification (IPC) or to both national classification and IPC

### B. FIELDS SEARCHED

Minimum documentation searched (classification system followed by classification symbols)

C21D8/12; C21D9/46; C22C38/00-C22C38/60; H01F1/147

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-19355 A (NIPPON STEEL & SUMITOMO METAL CORP.) 07 February 2019 (2019-02-07)<br>entire text, all drawings | 1-7 |
| A | JP 2002-180213 A (NKK CORP.) 26 June 2002 (2002-06-26)<br>entire text, all drawings | 1-7 |
| A | JP 2018-178198 A (NIPPON STEEL & SUMITOMO METAL CORP.) 15 November 2018 (2018-11-15)<br>entire text, all drawings | 1-7 |
| A | US 2014/0373340 A1 (VOESTALPINE STAHL GMBH) 25 December 2014 (2014-12-25)<br>entire text, all drawings | 1-7 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 September 2022** | **20 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| | International application No. |
| --- | --- |
| | **PCT/JP2022/026417** |

| Patent document cited in search report | Publication date (day/month/year) | Patent family member(s) | Publication date (day/month/year) |
| --- | --- | --- | --- |
| JP 2019-19355 A | 07 February 2019 | (Family: none) | |
| JP 2002-180213 A | 26 June 2002 | (Family: none) | |
| JP 2018-178198 A | 15 November 2018 | (Family: none) | |
| US 2014/0373340 A1 | 25 December 2014 | WO 2013/038020 A1 entire text, all drawings EP 2756106 A1 MX 2014003159 A | |

Form PCT/ISA/210 (patent family annex) (January 2015)

**EP 4 350 013 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008050686 A